# EUROPEAN PATENT APPLICATION

(11) **EP 2 637 009 A2**
(43) Date of publication of application: **11.09.2013**
(21) Application number: 13153438.0
(22) Date of filing: 31.01.2013
(51) Int. Cl.: G01L 19/06

(54) **Sensor and sense line heating device**

(30) Priority: 05.03.2012 US 201213411693
(71) Applicant: Hamilton Sundstrand Corporation, Windsor Locks, CT 06096-1010 (US)
(72) Inventor: McBrien, Gary M., South Glastonbury, CT Connecticut 06073 (US)
(74) Representative: Tomlinson, Kerry John

(57) **Abstract**

A system and method for warming and drying a pressure sensor (15) and sense line (17, 21) transmitting pressure gas from a source (13) of pressure gas to a sensor (15). A first tube (17, 21) is connected to the source (13) and to the sensor (15) to permit pressure measurement. A second tube (19, 23) is alongside or concentrically outside the first tube and connected to the same source (13) for providing heat from the pressure gas to the first tube (17, 21) and sensor (15). The second tube (19, 23) may have a temperature sensing device (21) for determining when the temperature of the first tube (17, 21) and sensor (15) reach a predetermined minimum temperature.

## Description

### BACKGROUND

Pressure sensors and associated sensor lines that sense various pressures in engines often experience problems related to moisture. Both water vapor and liquid water can enter the line. Water either enters sensors and sense lines in liquid form, or in gaseous form followed by condensation. The water has been demonstrated in many cases to be a source of malfunctions, leading to costly removals, repairs, problems encountered in flight, redesign and retrofits.

Water traps can be used, both flowing and non-flowing, with some effectiveness in removing the water. Heaters can be used with the sensors, but these consume power and add cost. Heaters may be difficult to install to ensure they apply heat to the right locations. Control mechanisms for heaters also add complexity. Flowing water traps can add an error to the sensed signal if the orifice/resulting flow is too large. Small orifices can plug and fail to flow when needed. An alternative way to keep pressure sensors and associated sensor lines free from moisture would be of value.

### SUMMARY

The present invention provides for warming and drying a pressure sensor and sense line by the use of a second tube or line that is heated using engine gases in a controlled fashion. In one embodiment, a first tube is provided for passage of pressure gas directly from the pressure port to the pressure sensor. A second tube that is larger than the first tube has the first tube inside it. The second, outer tube is also connected to the pressure port and includes a temperature-sensitive valve, such as a bi-metal valve. When the temperature of the pressure sensor or outer tube drops below a predetermined value, the valve senses the lower temperature and opens, thus allowing hot air to flow from the outer tube connection port at the engine, down the outer tube to the pressure sensor. This warms the first, inner tube until it reaches a predetermined temperature to accomplish keeping the inner tube and sensor dry by evaporation of any water that has developed in the inner tube or sensor.

In other embodiments, the valve in the outer tube can be eliminated and warm air would flow continuously to maintain the temperature of the inner tube and sensor above the moisture laden gas's condensation point temperature. Also, instead of concentric tubes, the two tubes can be parallel to each other, with an overall insulating sheath.

A significant advantage of the present invention is that the primary source of gas that goes to the sensor is direct and not affected by any other factor.

### BRIEF DESCRIPTION OF THE DRAWINGS

FIG. 1 is a schematic view of an example system according to this invention.

FIG. 2 is a schematic view of an alternative example system of this invention.

### DETAILED DESCRIPTION

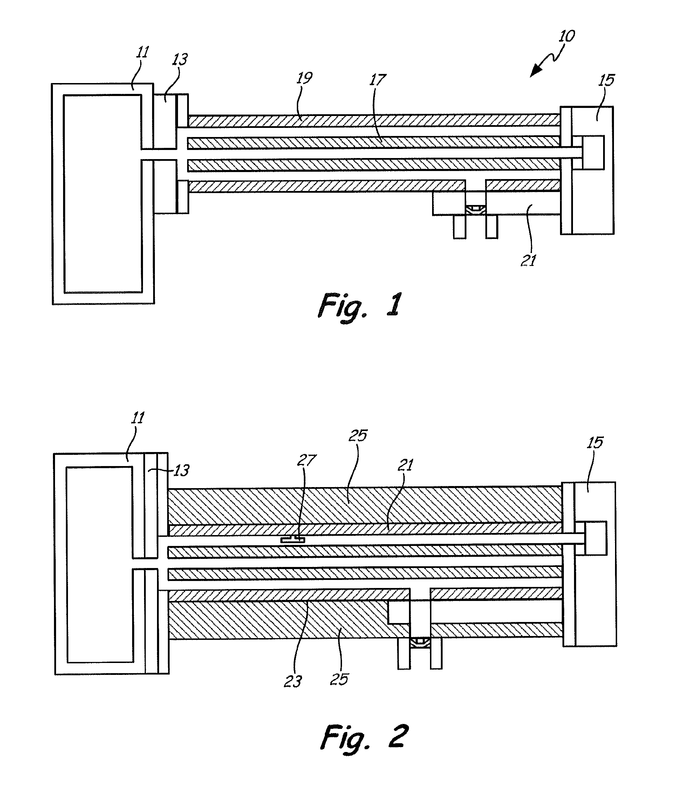

System 10 provides an effective and simple way to remove moisture from pressure gas as the pressure gas from a combustor 11 exits pressure port 13 and travels to pressure sensor 15 where the pressure is measured. A first tube 17 is used to connect pressure port 13 and pressure sensor 15 directly without any interference from any other equipment. Second tube 19, shown concentrically enclosing first tube 17 in FIG. 1, is also connected to pressure port 13 and receives pressure gas at the same elevated temperature.

A temperature sensing device 21 may be provided to determine when the temperature of the first tube 17 and/or sensor 15 drops to a predetermined minimum temperature, at which concern is raised that water vapor in the pressure gas may condense. The temperature sensing device may be a temperature-sensitive valve, such as a bi-metal valve, that opens when the valve senses the temperature has dropped below the predetermined minimum, thus opening and allowing hot air to flow from the pressure port 13 to pressure sensor 15 until sensor 15 warms up to a predetermined temperature value where water will not condense. This temperature is selected to provide the desired drying action to keep first tube 17 and sensor 15 dry by evaporation of whatever water has developed in tube 17 or sensor 15. Because the temperature regulation device provides the means to keep sensor 15 at a warmer temperature than would otherwise be seen when the engine is operating in a cold ambient environment, the overall sensor accuracy will be better because the accuracy of pressure sensors is usually affected by ambient temperature.

In some systems, it may not be necessary to have temperature activated valve 21 but rather allow warming air to flow in tube 19 continuously.

FIG. 2 illustrates an alternative design, placing a first tube 21 to convey pressure gas from pressure port 13 to sensor 15 and the second tube 23 is parallel to tube 21. Both are surrounded by insulating sheath 25. It should be noted that it is possible to fan out warm or hot pressure to multiple locations, allowing the system to be used to heat other devices, including ones that do not sense warm pressures or other parameters than pressure, particularly when cold accuracy performance is a concern.

Tube 21, and tube 17, may have a flowing or non-flowing water trap 27 in FIG. 2, depending on the particular engine being fitted with the present invention. Otherwise, tubes 17 and 21 have no other purpose than to transmit pressure gas to sensor 15.

The system and method of this invention provide a simple mechanism to use a small amout of the warm engine pressure to heat sensor 15 and line 17 to drive off moisture. Moisture has also been found to cany other contaminants into the sensed port that interfere with pressure sensing applications, even causing plugging in some instances, added corrosion and otherwise physically interfering with sensing measurement. The system of this invention is simple and easy to install, low cost and can be added to existing engines with little or no modifications. The system and method may also be used on larger components such as "full authority digital electronic control units" (FADECs) when pressure lines are attached thereto, eliminating the need for electrical heaters within the FADECs.

The system of this invention may be used with other devices or sensors in addition to pressure sensors, and could be used for sensors that measure other gas properties. The system may also be used with devices such as an actuator that is pressure activated but not a sensor per-se. Also, in some applications a pressure relief valve may be included so that when the engine is not running but turning slowly due to in-flight wind-milling and producing a small pressure, cold air will not pass through the tube and also through the valve. The pressure relief valve would prevent flow from going through the outside tube when the combustor pressure falls below a predetermined value corresponding to an engine off condition.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for warming and drying a pressure sensor and sense line, the system comprising:
a source of pressure gas;
a sensor for sensing the pressure of the pressure gas;
a first tube connected to the source and to the sensor to permit pressure measurement; and
a second tube proximate to the first tube and connected to the source for providing heat from the pressure gas to the first tube and sensor.

2. The system of claim 1, which further includes a temperature sensing device for determining when the temperature of the first tube and sensor reach a predetermined minimum temperature.

3. The system of claim 2, wherein the second tube is activated to provide the heat when the temperature reaches the predetermined minimum temperature.

4. The system of claim 2 or 3, wherein the temperature sensing device is a temperature-sensitive valve operable to open when the predetermined minimum temperature is reached.

5. The system of claim 1,2, 3 or 4, wherein the first tube is concentrically inside the second tube.

6. The system of claim 1, 2, 3 or 4, wherein the first tube and the second tube are parallel and enclosed in an insulating sheath.

7. The system of any preceding claim, wherein the first tube further contains a water trap for trapping water in the pressure gas.

8. The system of any preceding claim, wherein the second tube receives pressure gas constantly.

9. A method for warming and drying a pressure sensor and sense line, the method comprising:
providing a sensor for sensing the pressure of the pressure gas;
connecting a first tube to a source of pressure gas and to the sensor to permit pressure measurement; and
connecting a second tube proximate to the first tube and to the source to provide heat from the pressure gas to the first tube and sensor.

10. The method of claim 9, which further includes positioning a temperature sensing device for determining when the temperature of the first tube and sensor reach a predetermined minimum temperature.

11. The method of claim 10, wherein the second tube is activated to provide the heat when the temperature reaches the predetermined minimum temperature; and/or
wherein the temperature sensing device is a temperature-sensitive valve operable to open when the predetermined minimum temperature is reached.

12. The method of claim 9, 10 or 11, wherein the first tube is concentrically inside the second tube.

13. The method of claim 9, 10 or 11, wherein the first tube and the second tube are positioned parallel and enclosed in an insulating sheath.

14. The method of any of claims 9 to 13, which further includes placing a water trap for trapping water in the pressure gas in the first tube.

15. The method of any of claims 9 to 14, wherein the second tube receives pressure gas constantly.
